# EUROPEAN PATENT APPLICATION

(11) **EP 1 184 765 A2**
(43) Date of publication of application: **06.03.2002**
(21) Application number: 01119147.5
(22) Date of filing: 08.08.2001
(51) Int. Cl.: G05B 23/02

(54) **Apparatus for operating fermentation**

(30) Priority: 09.08.2000 JP 2000241834
(71) Applicant: Asahi Environmental System Ltd., Tokyo 104-0043 (JP)
(72) Inventor: Ishi, Hideaki, Takahagi-shi, Ibaraki 318-0034 (JP)
(74) Representative: Winter, Brandl, Fürniss, Hübner, Röss, Kaiser, Polte Partnerschaft

(57) **Abstract**

The present invention produces excellent compost in a short time by always measuring environmental conditions and measuring the quality of compost being produced. A maturation chamber (102) and a fermentation chamber (103) are each provided with corresponding ones of various sensors (121a to 121e) for measuring the concentrations of carbon dioxide and oxygen, temperature, humidity, the concentration of ammonia, and the like. The sensors (121a to 121e) are connected via remote I/O modules (122a and 122b) to a panel computer (116a) provided in the monitoring chamber (101). A measuring robot (141) installed in the measuring chamber (104) is provided with sensors (121f and 121g) for the temperature, water content, and PH of compost being produced, and the concentrations of carbon dioxide and ammonia at which the compost is produced. The measuring robot (141) is connected to a panel computer (116b) via a remote I/O module (122c).

## Description

The present invention relates to an apparatus for monitoring fermentation. More specifically, the present invention relates to an apparatus for monitoring fermentation of organic plant and animal residues, the apparatus being operative in a system for producing compost by treating organic plant and animal residues, to control a fermentation chamber and a maturation chamber on the basis of information from a plurality of sensors.

To produce compost by treating organic waste discharged from farms, cattle farms, food companies, and sludge treating centers, many production methods using aerobic fermentation materials have been proposed. Further, a method of producing excellent compost in a short time is disclosed in, for example, Japanese Patent Application Publication No. 2000-7477. This publication discloses a method and system for producing organic waste, the method and system yielding mature, bad-smell-free, and excellent compost and enabling such compost to be produced in a bad-smell-free environment.

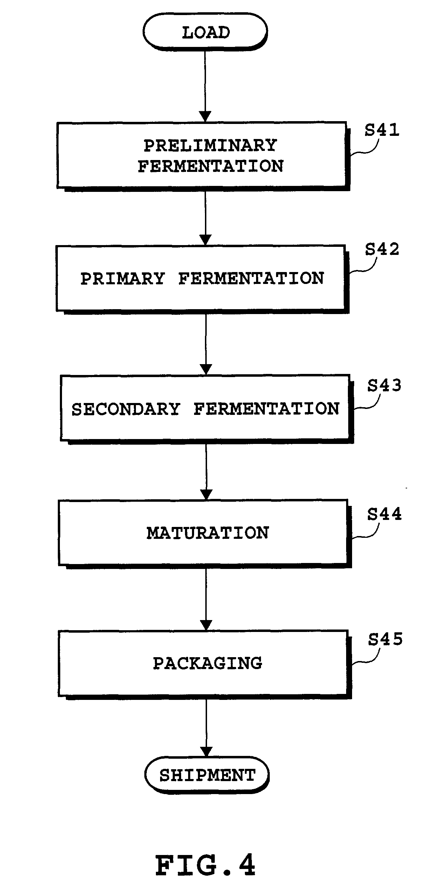

Fig. 4 shows a conventional process of fermenting organic residues. In a conventional compost producing system, organic plant and animal residues transported to the system have their water content and C/N ratio adjusted during a preliminary fermentation step (S41). Then, a primary fermentation step is executed, so that the organic plant and animal residues promote the growth of composted microorganisms under anaerobic conditions for five to ten days (S42). A secondary fermentation step further promotes fermentation under a mixture of anaerobic and aerobic conditions (S43). In a maturation step, the composted microorganisms are matured under aerobic conditions for 30 to 90 days. As a result, mature, bad-smell-free, and excellent compost is completed. The completed compost undergoes a sorting step, and is then packaged (S45) and shipped. A primary fermentation chamber, a secondary fermentation chamber, and a maturation chamber are each provided with measuring instruments for measuring the concentrations of carbon dioxide and oxygen, temperature, humidity, the concentration of ammonia, and the like so that control of the environmental conditions, movement of the compost, and the like can be executed on the basis of the results of the measurements.

In the conventional fermentation monitoring method, the environmental conditions in the primary and secondary fermentation chambers and in the maturation chamber are measured by manually collecting information from the measuring instruments, and these conditions are also manually controlled. Consequently, the conditions can be controlled only on a day-by-day basis. Thus, the environmental conditions cannot always be adjusted to the state of the compost, and it is thus difficult to produce a large amount of excellent compost in a short time.

In particular, the movement of the compost from the primary fermentation step to the secondary fermentation step and switching from the anaerobic conditions to the aerobic conditions must be controlled on a minute-by-minute basis. Thus, excellent compost cannot be obtained easily under the conventional day-by-day control.

It is an object of the present invention to provide an apparatus for monitoring fermentation of organic plant and animal residues, the apparatus producing excellent compost in a short time by always measuring environmental conditions and the quality of compost being produced.

To attain this object, the present invention provides a fermentation monitoring apparatus for a compost producing system for producing compost by fermenting organic plant and animal residues, the apparatus comprising environmental-condition measuring means for measuring environmental conditions in a production chamber where compost is fermented, quality measuring means for measuring the quality of the compost, and storage means storing parameters for controlling the environmental conditions in the production chamber, the apparatus being characterized by further comprising information collecting means for collecting results of environmental-condition measurements from the environmental-condition measuring means and results of quality measurements from the quality measuring means and control means for obtaining the parameters stored in the storage means and controlling the environmental conditions in the production chamber on the basis of the environmental-condition measurement results and/or the quality measurement results collected by the information collecting means.

Further, the information collecting means can collectively collect information from a plurality of sensors for measuring the environmental conditions in the production chamber.

The apparatus further comprises display means for displaying the environmental-condition measurement results or the quality measurement results collected by the information collecting means.

Moreover, the environmental-condition measurement results include the results of measurements of the concentrations of carbon dioxide and oxygen in the production chamber, a temperature therein, a humidity therein, and the concentration of ammonia therein, and the quality measurement results include the results of measurements of the temperature, water content, and PH of the compost, and the concentrations of carbon dioxide and ammonia at which the compost is produced.

The above and other objects, effects, features and advantages of the present invention will become more apparent from the following description of embodiments thereof taken in conjunction with the accompanying drawings.
Fig. 1 is a schematic view of a compost producing system provided with a fermentation monitoring apparatus according to one embodiment of the present invention;
Fig. 2 is a block diagram of the fermentation monitoring apparatus, which executes control using a panel computer;
Fig. 3 is a flow chart showing a control method using the panel computer; and
Fig. 4 is a flow chart showing a conventional step of fermenting organic residues.

An embodiment of the present invention will be described below in detail with reference to the drawings.

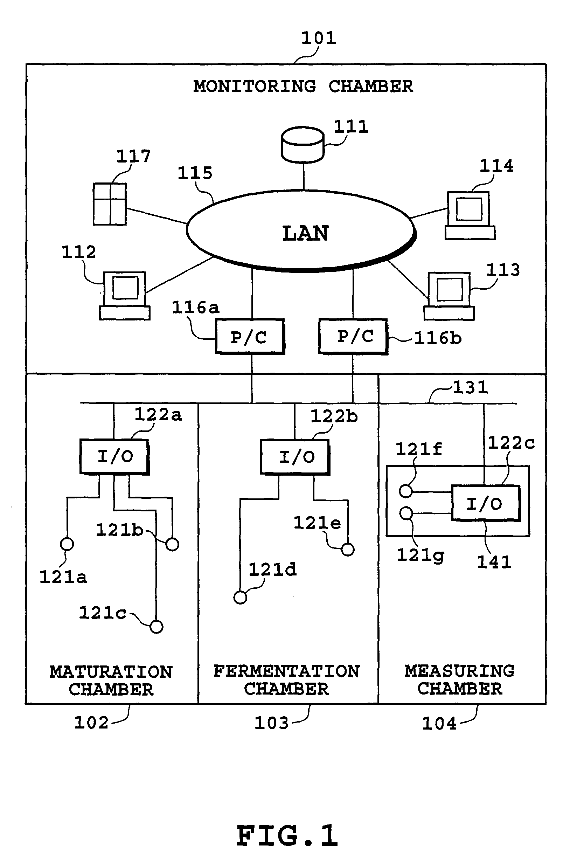

Fig. 1 is a schematic view of a compost producing system provided with a fermentation monitoring apparatus according to one embodiment of the present invention. The compost producing system comprises a monitoring chamber 101 that monitors the entire compost producing system, a measuring chamber 104 where the quality of compost is measured, a maturation chamber 102 that is a production chamber and in which compost is matured, and a fermentation chamber 103 that is also a production chamber and in which the compost undergoes a fermentation step. The fermentation chamber 103 is partitioned into a preliminary fermentation chamber, a primary fermentation chamber, and a secondary fermentation chamber depending on the fermentation step executed in that chamber. The monitoring chamber 101 is provided with a host server 111 for monitoring and controlling the entire compost producing system, an operational operating system 112 for managing a maintenance operator, a shipment operating system 113 for managing operations of packaging and shipping compost, and a warehouse operating system 114 for managing the entry and exit of organic plant and animal residues and compost into and from warehouses, wherein the host server and the systems are connected together via a local area network 115.

The maturation chamber 102 and the fermentation chamber 103 are each provided with corresponding ones of various sensors 121a to 121e connected via remote I/O modules 122a and 122b and an I/O line 131 to a panel computer 116a provided in the monitoring chamber 101. A measuring robot 141 installed in the measuring chamber 104 is provided with sensors 121f and 121g and connected to a panel computer 116b via a remote I/O module 122c. The sensors 121a to 121e provided in the maturation chamber 102 or the fermentation chamber 103 measure the concentrations of carbon dioxide and oxygen, temperature, humidity, the concentration of ammonia, and the like. The sensors 121f and 121g for the measuring robot 131 provided in the measuring chamber 104 measure the temperature, water content, and PH of compost being produced, and the concentrations of carbon dioxide and ammonia at which compost is produced. Further, the monitoring chamber 101 is provided with a near-infrared-ray analyzer 117 for measuring the quality of compost.

That is, in this embodiment, the results of measurements of environmental conditions obtained from the various sensors 121a to 121e, acting as environmental-condition measuring means, and the results of measurements of the quality obtained from the sensors 121f and 121g, acting as quality measuring means, are collected by the panel computers 116a and 116b via the remote I/O modules 122a to 122c, acting as information collecting means, and via the I/O line 131. The host server 111, acting as storage means, and the panel computers 116a and 116b, acting as control means, are connected together via the local area network 115.

With this configuration, organic plant and animal residues transported to the system have their water content and C/N ratio adjusted in the preliminary fermentation chamber of the fermentation chamber 103 under the control of the warehouse operating system 114 and the operational operating system 112. Then, in the primary fermentation chamber of the fermentation chamber 103, the growth of composted microorganisms is promoted under anaerobic conditions. Then, in the secondary fermentation chamber of the fermentation chamber 103, fermentation is promoted under a mixture of anaerobic and aerobic conditions. Finally, in the maturation chamber 102, the composted microorganisms are matured under aerobic conditions to complete compost. During this time, the panel computer 116a of the monitoring chamber 101 obtains from the host server 111 parameters for controlling the environmental conditions in the maturation chamber 102 and in the fermentation chamber 103, and collects the results of measurements of the environmental conditions from the various sensors 121a to 121e via the remote I/O modules 122a and 122b and the I/O line 131. The panel computer 116a controls the primary and secondary fermentation chambers and the maturation chamber on the basis of these parameters and the results of the measurements of the environmental conditions.

The compost, undergoing the maturation step in the maturation chamber 102, is periodically sampled, and the fermentation state of these samples is measured in the measuring chamber 104 using the measuring robot 141. The panel computer 116b manages the quality of the compost by collecting the results of measurements of the quality from the sensors 121f and 121g via the remote I/O module 122c and the I/O line 131. The quality of the compost is also measured by using the near-infrared-ray analyzer 117 or observing the microorganisms in the compost with a microscope. Under the control of the shipment operating system 113, the completed compost undergoes a sorting step, and is then packaged and shipped.

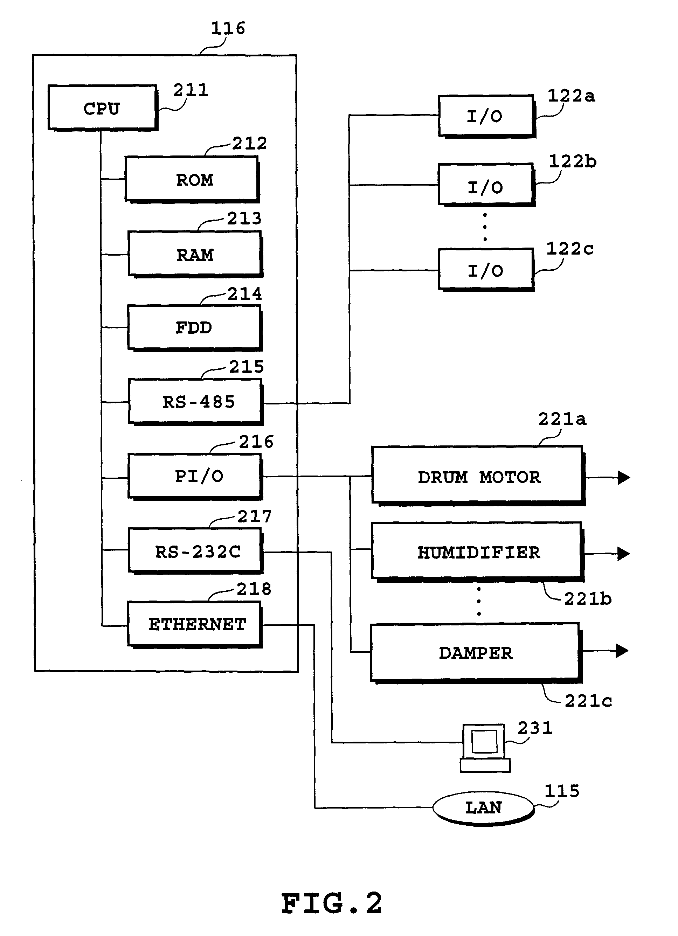

Fig. 2 is a block diagram showing one embodiment of control executed by the panel computer according to the present invention. The panel computer 116 comprises a ROM 212 having control programs stored therein, a RAM 213 for providing data processing areas, and a floppy disk drive 214 for program backup, all of which are connected to a CPU 211. The panel computer 116 is connected to external equipment via an RS-485 interface circuit 215 for connecting the panel computer 116 to the remote I/O modules 122a to 122c, a peripheral I/O circuit 216 for connecting the panel computer 116 to relay circuits 221a to 221c that control equipment such as a drum motor, an RS-232C interface circuit 217 for connecting the panel computer 116 to a control computer 231, and an Ethernet circuit 218 for connecting the panel computer 116 to the local area network 115.

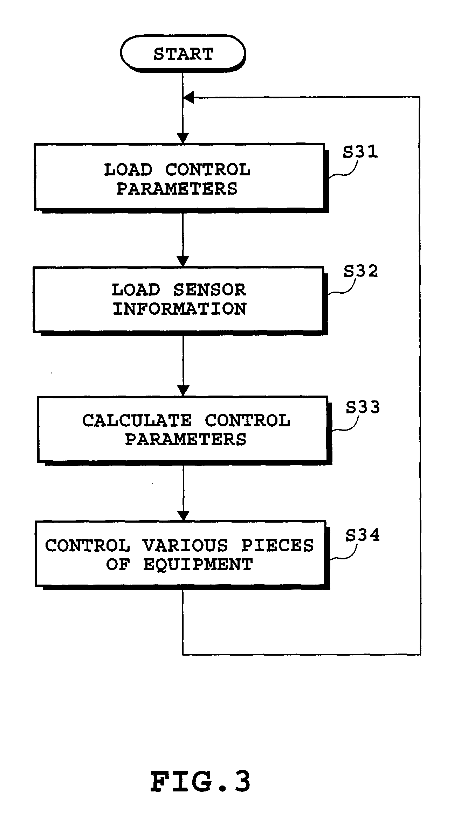

Fig. 3 is a flow chart showing one embodiment of control executed by the panel computer according to the present invention. An operation of the panel computer 116 will be described below with reference to Figs. 2 and 3. When starting operation, the panel computer 116 connects to the host server 111 via the Ethernet circuit 218 and the local area network 115 to obtain control parameters (S31). The panel computer 116 collects sensor information from the various sensors 121a to 121g via the RS-485 interface circuit 215 and the remote I/O modules 122a to 122c (S32). The sensor information includes, for example, the concentrations of carbon dioxide and oxygen, temperature, humidity, and the concentration of ammonia; it is always output and processed by the panel computer 116. The panel computer 116 calculates control parameters from the control parameters obtained from the host server 111 and from the sensor information loaded from the sensors 121a to 121g (S33). On the basis of the results of this calculation, the drum motor, a dehumidifier, a damper, and others are controlled via the peripheral I/O circuit 216 and the relay circuits 221a to 221c (S34).

According to this embodiment, the environmental conditions in the maturation chamber 102 and in the fermentation chamber 103 can be always measured. Further, since the results of measurements of the environmental conditions are collected via the remote I/O modules 122a and 122b and the I/O line 131, this embodiment can deal flexibly with various methods of measuring environmental conditions. Moreover, since the host server 111 manages the parameters for controlling the environmental conditions, the entire system can be collectively managed more easily.

The present invention has been described in detail with respect to preferred embodiments, and it will now be apparent from the foregoing to those skilled in the art that changes and modifications may be made without departing from the invention in its broader aspects, and it is the intention, therefore, in the appended claims to cover all such changes and modifications as fall within the true spirit of the invention.

## Claims

1. A fermentation monitoring apparatus for a compost producing system for producing compost by fermenting organic plant and animal residues, the apparatus comprising environmental-condition measuring means for measuring environmental conditions in a production chamber where compost is fermented, quality measuring means for measuring the quality of said compost, and storage means storing parameters for controlling the environmental conditions in said production chamber, the apparatus being **characterized by** further comprising:
information collecting means for collecting results of environmental-condition measurements from said environmental-condition measuring means and results of quality measurements from said quality measuring means; and
control means for obtaining said parameters stored in the storage means and controlling the environmental conditions in said production chamber on the basis of said environmental-condition measurement results and/or said quality measurement results collected by said information collecting means.

2. The fermentation monitoring apparatus according to Claim 1, **characterized in that** said information collecting means collects information from a plurality of sensors for measuring the environmental conditions in said production chamber.

3. The fermentation monitoring apparatus according to Claim 1, **characterized by** further comprising display means for displaying said environmental-condition measurement results or said quality measurement results collected by said information collecting means.

4. The fermentation monitoring apparatus according to Claim 1, **characterized in that** said environmental-condition measurement results include the results of measurements of the concentrations of carbon dioxide and oxygen in said production chamber, a temperature therein, a humidity therein, and the concentration of ammonia therein.

5. The fermentation monitoring apparatus according to Claim 1, **characterized in that** said quality measurement results include the results of measurements of the temperature, water content, and PH of the compost, and the concentrations of carbon dioxide and ammonia at which the compost is produced.
